## Europäisches Patentamt

## European Patent Office

## Office européen des brevets

(19)

(11) Veröffentlichungsnummer: **0 266 668**
**B1**

(12)

# EUROPÄISCHE PATENTSCHRIFT

(45) Veröffentlichungstag der Patentschrift:
03.01.90

(51) Int. Cl.⁴: **F16B 37/04**

(21) Anmeldenummer: **87115826.7**

(22) Anmeldetag: **28.10.87**

(54) **Halteklammer mit Bundmutter.**

(30) Priorität: **05.11.86 DE 3637705**

(43) Veröffentlichungstag der Anmeldung:
**11.05.88 Patentblatt 88/19**

(45) Bekanntmachung des Hinweises auf die Patenterteilung:
**03.01.90 Patentblatt 90/1**

(84) Benannte Vertragsstaaten:
**DE ES FR GB IT**

(56) Entgegenhaltungen:
**DE-A- 2 617 940**
**DE-C- 1 050 611**
**FR-A- 2 232 698**
**US-A- 4 408 939**

(73) Patentinhaber: **Firma A. Raymond, Teichstrasse 57,**
**D-7850 Lörrach(DE)**
Patentinhaber: **Daimler-Benz Aktiengesellschaft,**
**Postfach 600202 Mercedesstrasse 136,**
**D-7000 Stuttgart 60(DE)**

(72) Erfinder: **Mack, Gerhard, Juchstrasse 19,**
**D-7888 Rheinfelden-Adelhausen(DE)**
Erfinder: **Hänel, Joachim, Schiltacher Strasse 10,**
**D-7030 Böblingen(DE)**

ACTORUM AG

# Beschreibung

Die Erfindung bezieht sich auf eine Halteklammer mit Bundmutter mit radial und axial festgelegter Bundscheibe zum Festklemmen der Bundmutter auf dem gelochten Rand einer Trägerplatte, wobei die Halteklammer aus drei seitlich untereinander verbundenen Klemmschenkeln besteht und die Bundmutter zwischen dem oberen und dem mittleren Klemmschenkel eingespannt und gegen Verdrehung gesichert ist, wobei der obere Klemmschenkel auf der Bundscheibe federnd aufliegt.

Durch die DE-PS 1 050 611 ist eine Halteklammer nach dem Oberbegriff des Patentanspruchs 1 bekannt, bei der die Kantenflächen zur übertragung der Drehkraft auf die Bundmutter im verbreiterten Bundbereich angeordnet sind. dementsprechend sind zur verdrehsicheren Halterung der Kantenflächen aus dem Mittelschenkel Seitenwände hochgebogen. Damit aber im Mittelschenkel genügend Material zum Einschneiden und Hochbiegen der Seitenwände übrigbleibt, muß der als Ausgangsmaterial verwendete Blechstreifen entsprechend breiter gewählt werden, was naturgemäß mit einer Steigerung der Materialkosten verbunden ist. Außerdem kann diese Halteklammer nur Bundmuttern aufnehmen, bei denen die Kantenflächen im unteren Bundbereich angeordnet sind. Diese Bundmuttern werden aber nicht serienmänig hergestellt, sondern nur als Sonderanfertigungen, welche den Gesamtpreis von Halteklammer einschließlich Mutter ebenfalls ungünstig beeinflussen.

Aufgabe der Erfindung ist es, die im Oberbegriff des Anspruchs 1 angegebene Halteklammer mit Bundmutter so auszubilden, daß diese zur Aufnahme einer Standardmutter mit radial und axial festgelegter Bundscheibe geeignet ist und dabei problemlos mit dieser Bundmutter zusammengefügt und als Einheit mühelos auf den Rand der Trägerplatte aufgesteckt werden kann.

Diese Aufgabe wird erfindungsgemäß dadurch gelöst, daß der obere Klemmschenkel zur Aufnahme und zur Bildung der Sicherung gegen Verdrehung einer Standard-Bundmutter mit Sechskantkopf und daran anschließender Bundscheibe eine die Kantenflächen des Sechskantkopfes allseits umschließende Aussparung aufweist.

Der obere Schenkel der bekannten Halteklammer besitzt zwar ebenfalls eine Aussparung, doch ist diese im Gegensatz zu der erfindungsgemäßen Aussparung nicht allseits umschließend, sondern mindestens nach einer Seite offen und von solcher Breite, daß sich der zylindrische Hals der Bundmutter leicht von der öffnungsseite zwischen die Schenkellappen eindrücken läßt. Hierbei sorgen nach innen gerichtete Verbreitungen an den Schenkellappen dafür, daß die eingeführte Mutter nicht wieder heraustreten kann, sondern in etwa über dem Schraubenloch gehalten wird. Bei der bekannten Halteklammer dient somit der obere Schenkel in erster Linie dazu, die Bundscheibe der Mutter auf den Mittelschenkel zu drücken, während die Sicherung der Mutter gegen Verdrehung allein am Mittelschenkel durch die seitlich hochgebogenen Führungswände bewirkt wird. Durch die erfindungsgemäße Ausbildung der Halteklammer wird die sich auf dem Mittelschenkel abstützende Bundmutter dagegen im Oberschenkel zentriert sowie gleichzeitig gegen Verdrehung gesichert.

Durch die FR-A 2 232 698 ist zwar auch eine Halteklammer mit eingesetzter Mutter bekannt, bei welcher der obere Schenkel zur Sicherung gegen Verdrehung der Mutter eine ihre Kantenflächen allseits umschließende Aussparung aufweist. Jedoch handelt es sich hierbei nicht um eine Bundmutter mit radial und axial festgelegter Bundscheibe, sondern um eine einfache Vierkantmutter, so daß die der Erfindung zugrundeliegende Problematik der Halterung und des Zusammenfügens hierbei keine Bedeutung hat und demzufolge auch keine auf der Bundscheibe federnd aufliegende Elemente wie bei der Erfindung vorhanden sind.

Nach einer bevorzugten Ausgestaltung der Erfindung Kann der obere Klemmschenkel im vorderen Bereich mit dem Rand der Aussparung direkt auf der Bundscheibe aufliegen und sich im hinteren Bereich mit einem Lappen auf der Bundscheibe abstützen, welcher zweckmäßigerweise aus dem Material der sechseckigen Aussparung ausgestanzt und dann nach unten weggebogen ist. Durch diese Ausbildung braucht nur der vordere Teil des Oberschenkels über die volle Höhe der Mutter hochgebogen zu werden, während der Lappen im hinteren Teil nur wenig angehoben werden muß, um die Bundscheibe darunterzuschieben.

Nach einer anderen Ausgestaltung der Erfindung verläuft der obere Klemmschenkel mit Abstand parallel zum mittleren Klemmschenkel und ist mit zwei seitlich gegenüberliegenden, an den Seitenwänden der Bundmutter vorbeigeführten Lappen auf der Bundscheibe abgestützt, wobei die Lappen ebenfalls aus dem Material der Aussparung gebildet sind. Diese Klammerausbildung hat den Vorteil, daß der obere Klemmschenkel zum Einführen der Bundmutter in die Aussparung nur wenig angehoben werden muß und die Vormontage sich dadurch einfacher gestaltet.

In der Zeichnung sind zwei Ausführungsbeispiele der Erfindung dargestellt und sollen nachfolgend näher erläutert werden.

Es zeigt

Fig. 1 eine erfindungsgemäße Halteklammer mit eingebauter Bundmutter in Seitenansicht,

Fig. 2 die gleiche Klammer in einer Draufsicht,

Fig. 3 eine andere Ausführungsform der Halteklammer mit eingebauter Bundmutter in Seitenansicht,

Fig. 4 die gleiche Klammer in Draufsicht,

Fig. 5 die Bundmutter beim Einführen in die Klammer nach Fig. 3 und 4,

Fig. 6 die gleiche Klammer mit eingeführter Bundmutter beim Aufdrücken auf den gelochten Rand einer Trägerplatte und

Fig. 7 die Halteklammer mit Bundmutter nach Fig. 3 und 4 im montierten Zustand.

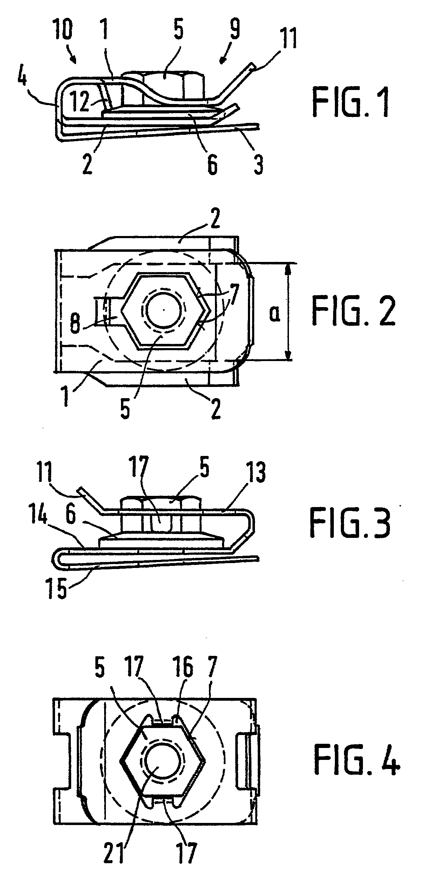

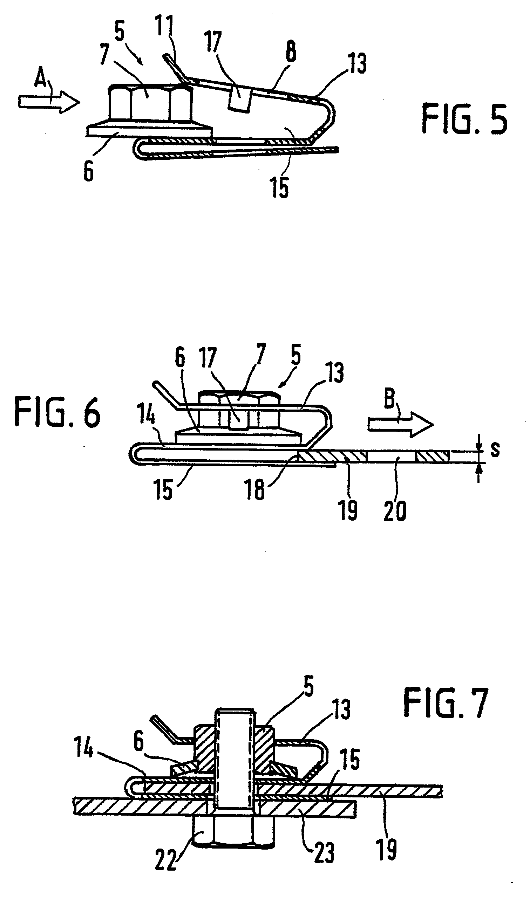

Die in Fig. 1 und 2 dargestellte Halteklammer besteht im wesentlichen aus einem oberen Klemmschenkel 1, einem aus zwei Lappen gebildeten mittleren Klemmschenkel 2 und einem unteren Klemmschenkel 3, wobei alle drei Schenkel auf der gleichen Seite durch einen Steg 4 untereinander verbunden sind. Der untere Klemmschenkel 3 ist hierbei aus fertigungstechnischen Gründen genau so breit wie der seitliche Abstand "a" zwischen den beiden Lappen des mittleren Klemmschenkels 2, so daß alle Schenkel 1, 2 und 3 aus einem Blechstreifen herausgestanzt und gebogen werden können. Die Halteklammer dient zur klemmenden und verdrehsicheren Halterung einer Sechskantmutter 5, die mit einer radial und axial festgelegten Bundscheibe 6 verbunden ist und ist bestimmt zur Positionierung dieser Mutter über dem Loch 20 einer Trägerplatte 19 (vgl. Fig. 6 und 7).

Der obere Klemmschenkel 1 besitzt eine die Kantenflächen 7 der Mutter 5 umschließende Aussparung 8 und ist an seinem vorderen Bereich 9 mit einer schräg hochstehenden Einführwand 11 versehen, welche das Einführen der Bundmutter 5 erleichtern soll (Fig. 5). Der vordere Bereich 9 des oberen Klemmschenkels 1 verläuft etwa parallel zum mittleren Klemmschenkel 2 und ist so weit heruntergebogen, daß der Rand der Aussparung 8 federnd auf der Bundscheibe 6 der eingeschobenen Mutter 5 aufliegt. Der hintere Bereich 10 des oberen Klemmschenkels 1 verläuft ebenfalls parallel zum mittleren Klemmschenkel 2, ist aber bis an den oberen Rand der Mutter 5 hochgeführt und auf dem hinteren Bereich der Bundscheibe 6 mit einem Lappen 12 abgestützt, welcher aus dem Material der Aussparung 8 ausgestanzt und nach unten weggebogen ist.

Bei dem in Fig. 3 und 4 dargestellten Ausführungsbeispiel besteht die Halteklammer aus drei S-förmig untereinander verbundenen Klemmschenkeln 13, 14 und 15, wobei der obere Schenkel 13 zum mittleren Schenkel 14 parallel verläuft und mit der Aussparung 16 die Mutter 5 im oberen Bereich verdrehsicher umschlossen hält. Aus dem Material der Aussparung 16 sind zwei seitlich gegenüberliegende Lappen 17 herausgestanzt und nach unten weggebogen, so dar der obere Schenkel 13 sich mit diesen Lappen 17 federnd auf der Bundscheibe 6 abstützt und so die Mutter in der Sechskantaussparung 16 gehalten wird.

In den Fig. 5 bis 7 ist die Montagefolge für die Halteklammer nach Fig. 3 und 4 anschaulich dargestellt. In Fig. 5 wird die Mutter 5 nach dem Hochbiegen des oberen Schenkels 13 in Pfeilrichtung "A" zwischen dem oberen Schenkel 13 und dem mittleren Schenkel 14 eingeschoben, bis die Sechskantflächen 7 der Bundmutter 5 in die Aussparung 16 einrasten. Dabei federt der obere Schenkel 13 wieder zurück, bis die Stützlappen 17 auf der Bundscheibe 6 fest aufliegen. Sodann wird die Halteklammer mit der eingesetzten Mutter 5, wie in Fig. 6 dargestellt, in Pfeilrichtung "B" auf den Rand 18 einer Trägerplatte 19 aufgedrückt, wobei der untere Schenkel 15 entsprechend der Blechdicke "S aufgebogen wird.

Die Klammer wird so weit aufgedrückt, bis die Mutter 5 sich mit dem zugehörigen Gewindeloch 21 über dem Befestigungsloch 20 der Trägerplatte 19 befindet. Nun kann ein anderes Bauteil 23 mittels einer Schraube 22 fest an der Trägerplatte 19 angeschraubt werden (Fig. 7).

## Patentansprüche

1. Halteklammer mit Bundmutter (5) mit radial und axial festgelegter Bundscheibe (6) zum Festklemmen der Bundmutter auf dem gelochten Rand einer Trägerplatte, wobei die Halteklammer aus drei seitlich untereinander verbundenen Klemmschenkeln (1, 2, 3; 13, 14, 15) besteht und die Bundmutter zwischen dem oberen und dem mittleren Klemmschenkel (1, 2; 13, 14) eingespannt und gegen Verdrehung gesichert ist, wobei der obere Klemmschenkel (1; 13) auf der Bundscheibe federnd aufliegt, dadurch gekennzeichnet, daß der obere Klemmschenkel (1; 13) zur Aufnahme und zur Bildung der Sicherung gegen Verdrehung einer Standard-Bundmutter mit Sechskantkopf und daran anschließender Bundscheibe eine die Kantenflächen (7) des Sechskantkopfes allseits umschließende Aussparung (8) aufweist.

2. Halteklammer mit Bundmutter nach Anspruch 1, wobei alle drei Klemmschenkel (1, 2, 3) auf der gleichen Seite durch einen Verbindungssteg (4) untereinander verbunden sind, dadurch gekennzeichnet, dar der obere Klemmschenkel (1) in seinem vorderen, vom Verbindungssteg (4) entfernten Bereich (g) mit dem Rand der Aussparung (8) direkt auf der Bundscheibe (6) aufliegt, während dieser Klemmschenkel (1) in seinem dem Verbindungssteg (4) benachbarten Bereich (10) bis etwa an den oberen Rand der Bundmutter (5) hochgeführt ist und auf dem hinteren Bereich der Bundscheibe (6) mit einem aus dem Material der Aussparung (8) ausgestanzten und nach unten weggebogenen Lappen (12) abgestützt ist.

3. Halteklammer mit Bundmutter nach Anspruch 1, dadurch gekennzeichnet, daß der obere Klemmschenkel (1; 13) mit Abstand parallel zum mittleren Klemmschenkel (2; 14) verläuft und mit zwei seitlich gegenüberliegenden an den Kantenflächen (7) der Bundmutter (5) vorbeigeführten Lappen (17) auf der Bundscheibe (6) abgestützt ist.

## Claims

1. A retaining clip with a flange nut (5) with radially and axially fixed flange disc (6) for rigidly clamping the flange nut on the perforated edge of a carrier plate, the retaining clip consisting of three laterally interconnected legs (1, 2, 3; 13, 14, 15), the flange nut being clamped between the upper and middle legs (1, 2; 13, 14) and being secured against rotation, the upper leg (1; 13) resting on the flange disc with a springing action, characterised in that for receiving and forming the safeguard against rotation of a standard flange nut with a hexagonal head and a flange disc adjacent thereto, the upper leg (1; 13) comprises a cut-out (8) engaging around all sides of the edges (7) of the hexagonal head.

2. A retaining clip with a flange nut according to Claim 1, in which all three legs, (1, 2, 3) of the clip are connected to one another on the same side by a connecting web (4), characterised in that the upper leg (1) in its front portion (9) which is remote from the connecting web (4), has the edge of the cut-out (8) bearing directly on the flange disc (6), while this leg (1) has its portion (10) which is adjacent the connecting web (4) extending upwardly substantially as far as the top edge of the flange nut (5) while being braced on the rear portion of the flange disc (6) through a lug (12) stamped out of the material of the cut-out (8) and then bent downwardly.

3. A retaining clip with a flange nut according to Claim 1, characterised in that the upper leg (1; 13) extends at a distance from and parallel with the middle leg (2; 14) and has two laterally oppositely disposed lugs (17) passing the edge surfaces (7) of the flange nut (5) and through which it is braced on the flange disc (6).

**Revendications**

1. Agrafe de retenue munie d'un écrou à collecrette (5) comportant une rondelle à épaulement (6) immobilisée dans le sens radial et dans le sens axial assurant la fixation de l'écrou à collerette sur le bord perforé d'un élément support, l'agrafe de retenue se composant en l'occurrence de trois branches formant agrafe (1, 2, 3; 13, 14, 15) reliées latéralement entre elles et l'écrou à collerette étant bridé entre la branche supérieure et de la branche médiane (1, 2; 13, 14) et immobilisé en rotation, la branche supérieure (1; 13) prenant en l'occurrence appui de façon élastique sur la rondelle à épaulement, se caractérisant par le fait que la branche supérieure (1; 13) comporte, pour recevoir un écrou à collerette standard à tête à six pans et la rondelle à époulement qui lui est adjointe, et les empêcher de tourner, un évidement (8) qui enserre de tous côtés les faces latérales (7) de la tête à six pans.

2. Agrafe de retenue à écrou à collerette suivante la revendication 1, se caractérisant par le fait que les trois branches formant agrafe (1, 2 ,3) sont reliées ensemble, sur le même côté, par l'intermédiaire d'une barrette entretoise de liaison (4), se caractérisant par le fait que la branche supérieure (1) prend, au niveau de sa partie avant (9) éloignée de la barrette entretoise (4) par le bord de l'évidement (8) directement appui sur la rondelle à épaulement (6), et que cette même branche supérieure (1) est relevée au niveau de sa partie (10) voisine de la barrette entretoise (4) dans une proportion allant sensiblement jusqu'au bord supérieur de l'écrou à collerette (5) etbprend appui sur la partie arrière de la rondelle à épaulement (6) à l'aide d'une languette (12) réalisée par découpage dans la matière de l'évidement (8), repliée vers extérieur vers le bas.

3. Agrafe de retenue à écrou à collerette suivant la revendication 1, se caractérisant par le fait que la branche supérieure (1; 13) est disposée, avec un certain dégagement, parallèlement à la branche médiane (2; 14) er prend appui à l'aide de deux lanquettes (17) diamètralement opposées passant devant les faces (7) de l'ecrou à collerette (5), sur la rondelle à épaulement.

FIG.1

FIG.2

FIG.3

FIG.4

FIG. 5

FIG. 6

FIG. 7